# EUROPEAN PATENT SPECIFICATION

(11) **EP 4 427 325 B1**
(45) Date of publication and mention of the grant of the patent: **11.11.2026**
(21) Application number: 21807279.1
(22) Date of filing: 04.11.2021
(51) Int. Cl.: H02K 1/20, H02K 5/20, H02K 3/24

(54) **STATOR WITH A FLUID CIRCULATION COOLING CIRCUIT FOR AN ELECTRIC MACHINE AND ELECTRIC MACHINE COMPRISING SAID STATOR**
STATOR MIT EINEM FLUIDUMLAUFKÜHLKREIS FÜR EINE ELEKTRISCHE MASCHINE UND ELEKTRISCHE MASCHINE MIT DIESEM STATOR
STATOR AVEC UN CIRCUIT DE REFROIDISSEMENT DE CIRCULATION DE FLUIDE POUR UNE MACHINE ÉLECTRIQUE ET MACHINE ÉLECTRIQUE COMPRENANT LEDIT STATOR

(43) Date of publication of application: 11.09.2024
(73) Proprietor: Hispeed Ltd., Bicester, Oxfordshire OX27 8FZ (GB)
(72) Inventor: MICHAELIDES, Alexandros, Bicester, Oxfordshire OX27 8FZ (GB); BETTONI, Davide, 11026 Pont-saint-martin (IT); CESA, Tiago, Bicester, Oxfordshire OX27 8FZ (GB); THACKWELL, Cleef, Bicester, Oxfordshire OX27 8FZ (GB)
(74) Representative: Ellis, Richard Andrew
(86) International application number: PCT/IB2021/060204
(87) International publication number: WO 2023/079336

(56) References cited:
- WO-A1-2019/034634
- WO-A2-2016/107626
- CN-A- 112 104 116
- DE-A1- 102015 220 691
- US-A1- 2020 280 244

## Description

The present invention relates to a stator for an electric machine with a fluid circulation cooling circuit and an electric machine comprising said stator.

In particular, the invention refers to a stator comprising a cooling circuit with oil circulation.

Known electric machines include a fixed part, the stator, and a moving part, the rotor, coaxially arranged one inside the other. Typically, the rotor comprises a pack of laminations fixed on a rotation shaft, and is inserted inside the stator which includes an electric winding capable of generating a magnetic field that causes the rotor to rotate.

The stator is generally made with a pack of overlapped laminations annular in shape and includes a plurality of longitudinal slots, inside which the electric winding is obtained.

A problem of known stators is caused by the thermal flux generated by the Joule effect when the winding is crossed by electric current: this heat flux must be evacuated to improve efficiency and prevent damage to the electric machine, as for example it is described in document FR 2 407 597, in which a cooling system uses water that circulates between a tubular support of the stator and a coaxial outer casing, forming one or more axial cooling channels.

Documents WO 2016/107626 A2, DE 10 2015 220691 A1, US 2020/280244 A1, WO 2019/034634 A1 and CN 112 104 116 A disclose stators with cooling channels in the laminations.

An object of the present invention is to solve this problem by means of a stator for an electric machine comprising a cooling circuit which allows to improve the cooling of the stator, in particular by improving the uniformity of its temperature and the cooling of the winding sectors that remain outside the slots.

The aforementioned and other objects and advantages of the invention, which will appear from the following description, are achieved with a stator for an electric machine with a fluid circulation cooling circuit and an electric machine comprising said stator, as those described in the independent claims.

Various embodiments and non-trivial variants of the present invention are the subject matter of the dependent claims.

It is understood that all attached claims form an integral part of the present description.

It will be immediately obvious that innumerable variations and modifications (for example relating to shape, dimensions, arrangements and parts with equivalent functionality) can be made to what is described, without departing from the scope of the invention as defined by the attached claims.

The present invention will be better described by some preferred embodiments thereof, provided as a non-limiting example, with reference to the attached drawings, in which:

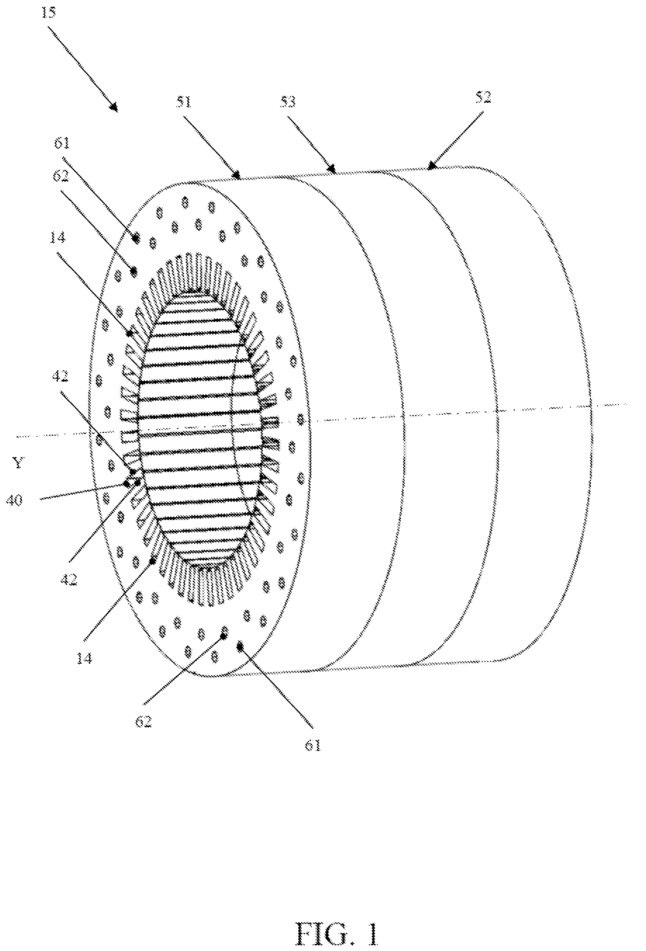

- FIG. 1 shows a perspective view of a stator for an electric machine with a fluid circulation cooling circuit according to the invention;

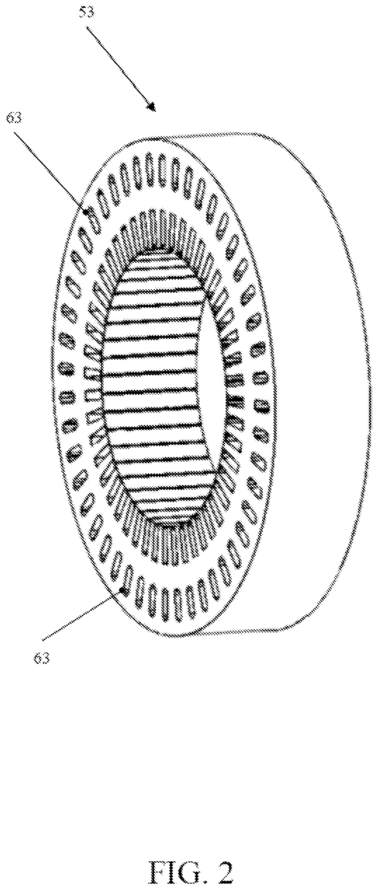

- FIG. 2 shows a perspective view of a stator lamination pack for an electric machine with a fluid circulation cooling circuit according to the invention;

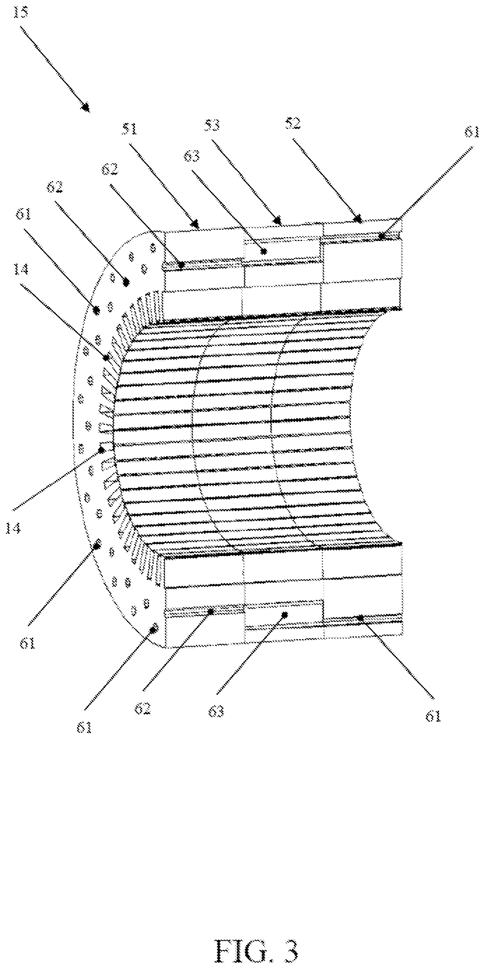

- FIG. 3 shows a perspective view of a stator section for an electric machine with a fluid circulation cooling circuit according to the invention;

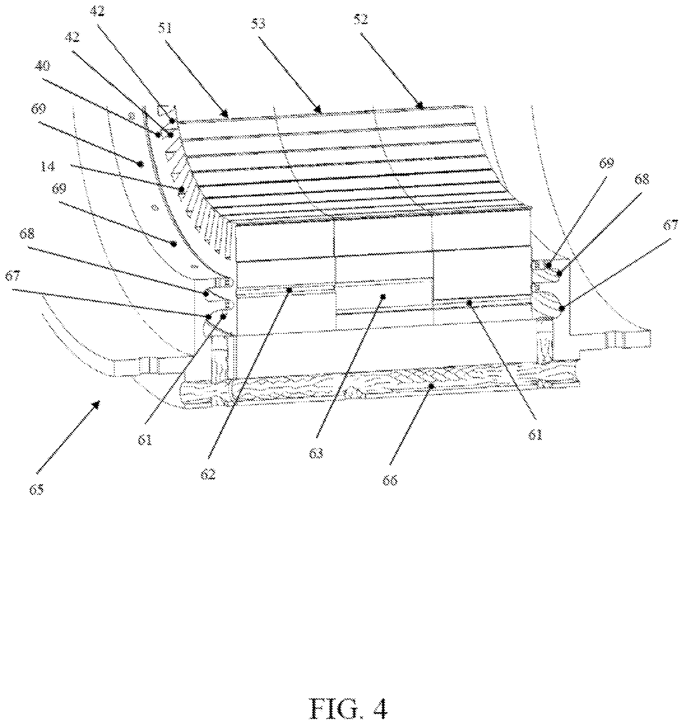

- FIG. 4 shows a partial section view of a stator for an electric machine with a fluid circulation cooling circuit according to the invention.

With reference to the figures, the stator 15 for an electric machine with a fluid circulation cooling circuit will be described below according to the invention. The stator 15, which is configured to house a rotor, comprises a plurality of longitudinal slots 14 arranged, preferably equidistant from each other, along a cylindrical internal wall of the stator 15.

Said longitudinal slots 14 are arranged along the direction of the longitudinal Y axis of the stator 15 and each longitudinal slot 14 of the stator 15 is formed by two side walls 42 and an upper wall 40. The longitudinal slots 14 are configured to receive an electric winding.

The stator 15 for an electric machine with a fluid circulation cooling circuit of the invention comprises a first external pack of laminations 51 and a second external pack of laminations 52 arranged in correspondence with the two external annular surfaces of the stator 15, and a third internal pack of laminations 53 interposed between the first external pack of laminations 51 and the second external pack of laminations 52.

The stator 15 for an electric machine with a fluid circulation cooling circuit of the invention comprises a plurality of inlet cooling channels 61 and a plurality of outlet cooling channels 62 made in the first external pack of laminations 51 and in the second external pack of laminations 52; the stator 15 for an electric machine with a fluid circulation cooling circuit of the invention further comprises a plurality of intermediate cooling channels 63 connected to respective inlet cooling channels 61 and outlet cooling channels 62 and made in the third internal pack of laminations 53.

The inlet cooling channels 61 may be made in correspondence with the external cylindrical stator surface, preferably placed at the same distance from the longitudinal Y axis of the stator 15 and equidistant from each other, and the outlet cooling channels 62 are made in correspondence with the stator 15 longitudinal slots 14, preferably placed at the same distance from the longitudinal Y axis of the stator 15 and equidistant from each other. That is, the inlet cooling channels 61 are positioned radially closer than the outlet cooling channels 62 to an external cylindrical stator surface, and the outlet cooling channels 62 are positioned radially closer than the inlet cooling channels 61 to the longitudinal slots 14.

The intermediate cooling channels 63 may have an elongated section to connect, in a radially outer part of the elongated section, to the inlet cooling channel 61, and, in a radially inner part of the elongated section, to the outlet cooling channel 62. The inlet cooling channels 61, outlet cooling channels 62 and intermediate cooling channels 63 may be made by drilling the laminations before forming the respective first external pack of laminations 51, second external pack of laminations 52, and third internal pack of laminations 53.

To make the stator 15, the first external pack of laminations 51 and the second external pack of laminations 52 are rotated relative to each other so that the inlet cooling channels 61 of one of the external lamination packs are angularly aligned with the outlet cooling channels 62 of the other of the external lamination packs, said inlet cooling channels 61 and outlet cooling channels 62 being also angularly aligned with the respective intermediate cooling channels 63 formed in the third internal pack of laminations 53 interposed between the first external pack of laminations 51 and the second external pack of laminations 52.

The stator 15 for an electric machine with a fluid circulation cooling circuit according to the invention further comprises an external structure 65 for containing the cooling fluid comprising a main fluid inlet channel 66, which preferably extends axially on the cylindrical stator surface, and is connected to a fluid inlet channel 67, which is connected in turn with the inlet cooling channels 61; preferably the external structure 65 for containing the cooling fluid comprises two fluid inlet channels 67 which extend in a circular direction on the surfaces of the first external pack of laminations 51 and of the second external pack of laminations 52 which constitute the two external annular surfaces of the stator 15.

The external structure 65 for containing the cooling fluid also comprises a fluid outlet channel 68 for the fluid, which is connected in turn with the outlet cooling channels 62; preferably the external structure 65 for containing the cooling fluid comprises two fluid outlet channels 68 which extend in a circular direction on the surfaces of the first external pack of laminations 51 and the second external pack of laminations 52 which constitute the two external annular stator surfaces; preferably said fluid outlet channel 68 is parallel to the fluid inlet channel 67 and comprises a plurality of holes 69 or fluid outlet nozzles configured to direct the cooling fluid on the ends of the winding which are outside the closed slots 14.

The stator 15 for an electric machine with a fluid circulation cooling circuit of the invention comprises a cooling circuit formed by the main fluid inlet channel 66, the fluid inlet channel or channels 67, the inlet cooling channels 61, outlet cooling channels 62 and the fluid outlet channel or channels 68.

Advantageously, the stator for an electric machine with a fluid circulation cooling circuit of the present invention is to improve the cooling of the stator, in particular by improving the uniformity of its temperature, more particularly the uniformity of the temperature distribution, axially in the electric machine, and the cooling of the winding sectors that remain outside the closed slots.

## Claims

1. A stator (15) for an electric machine with a fluid circulation cooling circuit, the stator (15) comprising: a plurality of longitudinal slots (14) for receiving an electric winding, the plurality of longitudinal slots (14) arranged along a cylindrical internal wall of the stator (15), wherein the stator (15) is configured to house a rotor; a first external pack of laminations (51) and a second external pack of laminations (52) arranged in correspondence with the two external annular surfaces of the stator (15); and a third internal pack of laminations (53) interposed between the first external pack of laminations (51) and the second external pack of laminations (52), said stator (15) further comprising a plurality of axial inlet cooling channels (61) made in the first external pack of laminations (51) and in the second external pack of laminations (52) and a plurality of axial outlet cooling channels (62) at a different radial and circumferential position than the inlet cooling channels (61) made in the first external pack of laminations (51) and in the second external pack of laminations (52) and a plurality of axial intermediate cooling channels (63) connected to respective inlet cooling channels (61) and outlet cooling channels (62) and made in the third internal pack of laminations (53) for improving the uniformity of the temperature distribution, axially in the electric machine; **characterized in that** the first external pack of laminations (51) and the second external pack of laminations (52) are rotated relative to each other so that the inlet cooling channels (61) of one of the external lamination packs are angularly aligned with the outlet cooling channels (62) of the other of the external lamination packs, said inlet cooling channels (61) and outlet cooling channels (62) being also angularly aligned with the respective intermediate cooling channels (63) formed in the third internal pack of laminations (53).

2. A stator (15) for an electric machine with a fluid circulation cooling circuit according to claim 1, **characterized in that** the inlet cooling channels (61) are radially closer than the outlet cooling channels (62) to an external cylindrical stator surface, and the outlet cooling channels (62) are radially closer than the inlet cooling channels (61) to the longitudinal slots (14).

3. A stator (15) for an electric machine with a fluid circulation cooling circuit according to claim 2, **characterized in that** the inlet cooling channels (61) are placed at the same distance from the longitudinal (Y) axis of the stator (15) and equidistant from each other, and the outlet cooling channels (62) are placed at the same distance from the longitudinal (Y) axis of the stator (15) and equidistant from each other.

4. A stator (15) for an electric machine with a fluid circulation cooling circuit according to any one of the preceding claims, **characterized in that** the intermediate cooling channels (63) have an elongated section to connect, in a radially outer part of the elongated section, to the inlet cooling channel (61), and, in a radially inner part of the elongated section, to the outlet cooling channel (62).

5. A stator (15) for an electric machine with a fluid circulation cooling circuit according to any one of the preceding claims, **characterized in that** the inlet cooling channels (61), outlet cooling channels (62), and intermediate cooling channels (63) are made by drilling the laminations before forming the respective first external pack of laminations (51), second external pack of laminations (52), and third internal pack of laminations (53).

6. A stator (15) for an electric machine with a fluid circulation cooling circuit according to any one of the preceding claims, **characterized in that** further comprises an external structure (65) for containing the cooling fluid comprising a main fluid inlet channel (66) connected to a fluid inlet channel (67) which is connected in turn with the inlet cooling channels (61).

7. A stator (15) for an electric machine with a fluid circulation cooling circuit according to claim 6, **characterized in that** the main fluid inlet channel (66) extends axially on the cylindrical stator surface.

8. A stator (15) for an electric machine with a fluid circulation cooling circuit according to claim 6 or claim 7, **characterized in that** the external structure (65) for containing the cooling fluid comprises two fluid inlet channels (67) which extend in a circular direction on the surfaces of the first external pack of laminations (51) and of the second external pack of laminations (52).

9. A stator (15) for an electric machine with a fluid circulation cooling circuit according to any one of claims 6 to 8, **characterized in that** the external structure (65) for containing the cooling fluid comprises a fluid outlet channel (68) for the fluid which is connected with the outlet cooling channels (62).

10. A stator (15) for an electric machine with a fluid circulation cooling circuit according to claim 9, **characterized in that** the external structure (65) for containing the cooling fluid comprises two fluid outlet channels (68) which extend in a circular direction on the surfaces of the first external pack of laminations (51) and the second external pack of laminations (52).

11. A stator (15) for an electric machine with a fluid circulation cooling circuit according to claim 9 or claim 10, **characterized in that** said fluid outlet channel (68) is parallel to the fluid inlet channel (67) and comprises a plurality of holes (69) or fluid outlet nozzles configured to direct the cooling fluid onto the ends of the winding which are outside the longitudinal slots (14).

12. An electric machine comprising a stator (15) for an electric machine with a fluid circulation cooling circuit according to any one of the preceding claims.

## Patentansprüche

1. Stator (15) für eine elektrische Maschine mit einem Fluidumlaufkühlkreis, wobei der Stator (15) Folgendes umfasst: eine Vielzahl von Längsnuten (14) zum Aufnehmen einer elektrischen Wicklung, wobei die Vielzahl von Längsnuten (14) entlang einer zylindrischen Innenwand des Stators (15) angeordnet ist, wobei der Stator (15) dazu konfiguriert ist, einen Rotor aufzunehmen; ein erstes äußeres Paket von Ankerblechen (51) und ein zweites äußeres Paket von Ankerblechen (52), die in Übereinstimmung mit den zwei äußeren ringförmigen Oberflächen des Stators (15) angeordnet sind; und ein drittes inneres Paket von Ankerblechen (53), das zwischen dem ersten äußeren Paket von Ankerblechen (51) und dem zweiten äußeren Paket von Ankerblechen (52) eingefügt ist, wobei der Stator (15) ferner eine Vielzahl von axialen Einlasskühlkanälen (61), die in dem ersten äußeren Paket von Ankerblechen (51) und in dem zweiten äußeren Paket von Ankerblechen (52) hergestellt sind, und eine Vielzahl von axialen Auslasskühlkanälen (62), die sich an einer anderen radialen und umfänglichen Position als die Einlasskühlkanäle (61) befinden und in dem ersten äußeren Paket von Ankerblechen (51) und in dem zweiten äußere Paket von Ankerblechen (52) hergestellt sind, und eine Vielzahl von axialen Zwischenkühlkanälen (63) umfasst, die mit jeweiligen Einlasskühlkanälen (61) und Auslasskühlkanälen (62) verbunden sind und in dem dritten inneren Paket von Ankerblechen (53) hergestellt sind, um die Gleichmäßigkeit der Temperaturverteilung axial in der elektrischen Maschine zu verbessern; **dadurch gekennzeichnet, dass** das erste äußere Paket von Ankerblechen (51) und das zweite äußere Paket von Ankerblechen (52) relativ zueinander gedreht sind, so dass die Einlasskühlkanäle (61) eines der äußeren Ankerblechpakete winkelmäßig mit den Auslasskühlkanälen (62) des anderen der äußeren Ankerblechpakete ausgerichtet sind, wobei die Einlasskühlkanäle (61) und Auslasskühlkanäle (62) auch winkelmäßig mit den jeweiligen Zwischenkühlkanälen (63) ausgerichtet sind, die in dem dritten inneren Paket von Ankerblechen (53) gebildet sind.

2. Stator (15) für eine elektrische Maschine mit einem Fluidumlaufkühlkreis nach Anspruch 1, **dadurch gekennzeichnet, dass** die Einlasskühlkanäle (61) radial näher als die Auslasskühlkanäle (62) zu einer äußeren zylindrischen Statoroberfläche sind und die Auslasskühlkanäle (62) radial näher als die Einlasskühlkanäle (61) zu den Längsnuten (14) sind.

3. Stator (15) für eine elektrische Maschine mit einem Fluidumlaufkühlkreis nach Anspruch 2, **dadurch gekennzeichnet, dass** die Einlasskühlkanäle (61) im gleichen Abstand von der Längsachse (Y) des Stators (15) und äquidistant voneinander platziert sind und die Auslasskühlkanäle (62) im gleichen Abstand von der Längsachse (Y) des Stators (15) und äquidistant voneinander platziert sind.

4. Stator (15) für eine elektrische Maschine mit einem Fluidumlaufkühlkreis nach einem der vorhergehenden Ansprüche, **dadurch gekennzeichnet, dass** die Zwischenkühlkanäle (63) einen länglichen Abschnitt aufweisen, um in einem radial äußeren Teil des länglichen Abschnitts mit dem Einlasskühlkanal (61) und in einem radial inneren Teil des länglichen Abschnitts mit dem Auslasskühlkanal (62) zu verbinden.

5. Stator (15) für eine elektrische Maschine mit einem Fluidumlaufkühlkreis nach einem der vorhergehenden Ansprüche, **dadurch gekennzeichnet, dass** die Einlasskühlkanäle (61), Auslasskühlkanäle (62) und Zwischenkühlkanäle (63) durch Bohren der Ankerbleche hergestellt werden, bevor das jeweilige erste äußere Paket von Ankerblechen (51), das zweite äußere Paket von Ankerblechen (52) und das dritte innere Paket von Ankerblechen (53) gebildet werden.

6. Stator (15) für eine elektrische Maschine mit einem Fluidumlaufkühlkreis nach einem der vorhergehenden Ansprüche, **dadurch gekennzeichnet, dass** er ferner eine äußere Struktur (65) zum Enthalten des Kühlfluids umfasst, die einen Hauptfluideinlasskanal (66) umfasst, der mit einem Fluideinlasskanal (67) verbunden ist, der wiederum mit den Einlasskühlkanälen (61) verbunden ist.

7. Stator (15) für eine elektrische Maschine mit einem Fluidumlaufkühlkreis nach Anspruch 6, **dadurch gekennzeichnet, dass** sich der Hauptfluideinlasskanal (66) axial auf der zylindrischen Statoroberfläche erstreckt.

8. Stator (15) für eine elektrische Maschine mit einem Fluidumlaufkühlkreis nach Anspruch 6 oder Anspruch 7, **dadurch gekennzeichnet, dass** die äußere Struktur (65) zum Enthalten des Kühlfluids zwei Fluideinlasskanäle (67) umfasst, die sich in einer kreisförmigen Richtung auf den Oberflächen des ersten äußeren Pakets von Ankerblechen (51) und des zweiten äußeren Pakets von Ankerblechen (52) erstrecken.

9. Stator (15) für eine elektrische Maschine mit einem Fluidumlaufkühlkreis nach einem der Ansprüche 6 bis 8, **dadurch gekennzeichnet, dass** die äußere Struktur (65) zum Enthalten des Kühlfluids einen Fluidauslasskanal (68) für das Fluid umfasst, der mit den Auslasskühlkanälen (62) verbunden ist.

10. Stator (15) für eine elektrische Maschine mit einem Fluidumlaufkühlkreis nach Anspruch 9, **dadurch gekennzeichnet, dass** die äußere Struktur (65) zum Enthalten des Kühlfluids zwei Fluidauslasskanäle (68) umfasst, die sich in einer kreisförmigen Richtung auf den Oberflächen des ersten äußeren Pakets von Ankerblechen (51) und des zweiten äußeren Pakets von Ankerblechen (52) erstrecken.

11. Stator (15) für eine elektrische Maschine mit einem Fluidumlaufkühlkreis nach Anspruch 9 oder Anspruch 10, **dadurch gekennzeichnet, dass** der Fluidauslasskanal (68) parallel zu dem Fluideinlasskanal (67) ist und eine Vielzahl von Löchern (69) oder Fluidauslassdüsen umfasst, die dazu konfiguriert sind, das Kühlfluid auf die Enden der Wicklung zu leiten, die sich außerhalb der Längsnuten (14) befinden.

12. Elektrische Maschine, umfassend einen Stator (15) für eine elektrische Maschine mit einem Fluidumlaufkühlkreis nach einem der vorhergehenden Ansprüche.

## Revendications

1. Stator (15) pour une machine électrique doté d'un circuit de refroidissement à circulation de fluide, le stator (15) comprenant : une pluralité de fentes longitudinales (14) destinées à recevoir un enroulement électrique, la pluralité de fentes longitudinales (14) étant agencées le long d'une paroi intérieure cylindrique du stator (15), ledit stator (15) étant conçu pour loger un rotor ; un premier bloc extérieur de tôles (51) et un deuxième bloc extérieur de tôles (52) agencés en correspondance avec les deux surfaces annulaires extérieures du stator (15) ; et un troisième bloc intérieur de tôles (53) interposé entre le premier bloc extérieur de tôles (51) et le deuxième bloc extérieur de tôles (52), ledit stator (15) comprenant en outre une pluralité de canaux de refroidissement d'entrée axiaux (61) réalisés dans le premier bloc extérieur de tôles (51) et dans le deuxième bloc extérieur de tôles (52) et une pluralité de canaux de refroidissement de sortie axiaux (62) au niveau d'une position radiale et circonférentielle différente de celle des canaux de refroidissement d'entrée (61) réalisés dans le premier bloc extérieur de tôles (51) et dans le deuxième bloc extérieur de tôles (52) et une pluralité de canaux de refroidissement intermédiaires axiaux (63) reliés aux canaux de refroidissement d'entrée (61) et aux canaux de refroidissement de sortie (62) respectifs et réalisés dans le troisième bloc intérieur de tôles (53) en vue de l'amélioration de l'uniformité de la distribution de température, axialement dans la machine électrique ; **caractérisé en ce que** le premier bloc extérieur de tôles (51) et le deuxième bloc extérieur de tôles (52) sont tournés l'un par rapport à l'autre afin que les canaux de refroidissement d'entrée (61) de l'un des blocs de tôles extérieurs soient alignés angulairement avec les canaux de refroidissement de sortie (62) de l'autre des blocs de tôles extérieurs, lesdits canaux de refroidissement d'entrée (61) et lesdits canaux de refroidissement de sortie (62) étant également alignés angulairement avec les canaux de refroidissement intermédiaires respectifs (63) formés dans le troisième bloc intérieur de tôles (53).

2. Stator (15) pour une machine électrique doté d'un circuit de refroidissement à circulation de fluide selon la revendication 1, **caractérisé en ce que** les canaux de refroidissement d'entrée (61) sont radialement plus proches que les canaux de refroidissement de sortie (62) d'une surface de stator cylindrique extérieure, et les canaux de refroidissement de sortie (62) sont radialement plus proches que les canaux de refroidissement d'entrée (61) des fentes longitudinales (14).

3. Stator (15) pour une machine électrique doté d'un circuit de refroidissement à circulation de fluide selon la revendication 2, **caractérisé en ce que** les canaux de refroidissement d'entrée (61) sont placés à la même distance de l'axe longitudinal (Y) du stator (15) et équidistants les uns des autres, et les canaux de refroidissement de sortie (62) sont placés à la même distance de l'axe longitudinal (Y) du stator (15) et équidistants les uns des autres.

4. Stator (15) pour une machine électrique doté d'un circuit de refroidissement à circulation de fluide selon l'une quelconque des revendications précédentes, **caractérisé en ce que** les canaux de refroidissement intermédiaires (63) possèdent une section allongée pour se relier, dans une partie radialement externe de la section allongée, au canal de refroidissement d'entrée (61), et, dans une partie radialement interne de la section allongée, au canal de refroidissement de sortie (62).

5. Stator (15) pour une machine électrique doté d'un circuit de refroidissement à circulation de fluide selon l'une quelconque des revendications précédentes, **caractérisé en ce que** les canaux de refroidissement d'entrée (61), les canaux de refroidissement de sortie (62) et les canaux de refroidissement intermédiaires (63) sont réalisés en perçant les tôles avant de former le premier bloc extérieur respectif de tôles (51), le deuxième bloc extérieur de tôles (52) et le troisième bloc intérieur de tôles (53).

6. Stator (15) pour une machine électrique doté d'un circuit de refroidissement à circulation de fluide selon l'une quelconque des revendications précédentes, **caractérisé en ce qu'**il comprend en outre une structure extérieure (65) destinée à contenir le fluide de refroidissement comprenant un canal d'entrée de fluide principal (66) relié à un canal d'entrée de fluide (67) qui est relié à son tour aux canaux de refroidissement d'entrée (61).

7. Stator (15) pour une machine électrique doté d'un circuit de refroidissement à circulation de fluide selon la revendication 6, **caractérisé en ce que** le canal d'entrée de fluide principal (66) s'étend axialement sur la surface de stator cylindrique.

8. Stator (15) pour une machine électrique doté d'un circuit de refroidissement à circulation de fluide selon la revendication 6 ou la revendication 7, **caractérisé en ce que** la structure extérieure (65) destinée à contenir le fluide de refroidissement comprend deux canaux d'entrée de fluide (67) qui s'étendent dans une direction circulaire sur les surfaces du premier bloc extérieur de tôles (51) et du deuxième bloc extérieur de tôles (52).

9. Stator (15) pour une machine électrique doté d'un circuit de refroidissement à circulation de fluide selon l'une quelconque des revendications 6 à 8, **caractérisé en ce que** la structure extérieure (65) destinée à contenir le fluide de refroidissement comprend un canal de sortie de fluide (68) pour le fluide qui est relié aux canaux de refroidissement de sortie (62).

10. Stator (15) pour une machine électrique doté d'un circuit de refroidissement à circulation de fluide selon la revendication 9, **caractérisé en ce que** la structure extérieure (65) destinée à contenir le fluide de refroidissement comprend deux canaux de sortie de fluide (68) qui s'étendent dans une direction circulaire sur les surfaces du premier bloc extérieur de tôles (51) et du deuxième bloc extérieur de tôles (52).

11. Stator (15) pour une machine électrique doté d'un circuit de refroidissement à circulation de fluide selon la revendication 9 ou la revendication 10, **caractérisé en ce que** ledit canal de sortie de fluide (68) est parallèle au canal d'entrée de fluide (67) et comprend une pluralité de trous (69) ou de buses de sortie de fluide conçus pour diriger le fluide de refroidissement sur les extrémités de l'enroulement qui sont à l'extérieur des fentes longitudinales (14).

12. Machine électrique comprenant un stator (15) pour une machine électrique doté d'un circuit de refroidissement à circulation de fluide selon l'une quelconque des revendications précédentes.
